# EUROPÄISCHE PATENTANMELDUNG

(11) **EP 2 977 872 A1**
(43) Veröffentlichungstag der Anmeldung: **27.01.2016**
(21) Anmeldenummer: 14178195.5
(22) Anmeldetag: 23.07.2014
(51) Int. Cl.: G06F 3/044

(54) **Fehlersicherer Touchscreen**

(71) Anmelder: Siemens Aktiengesellschaft, 80333 München (DE)
(72) Erfinder: Glaser, Maximilian, 91365 Weilersbach (DE); Moniac, Sven, 91056 Erlangen (DE); Singer, Marc, 91301 Forchheim (DE)

(57) **Zusammenfassung**

Die Bedienung eines elektrischen Gerätes aus dem Bereich der Automatisierungstechnik mittels eines Touchscreens (2) soll verbessert werden. Hierzu wird bei einem Touchscreen (2) zur Bedienung eines Touchscreen-Gerätes (1) durch Berührung des Touchscreens (2) durch einen Benutzer vorgesehen, dass der Touchscreen (2) in einer ersten Ebene eine erste leitfähige Senderstruktur (32) und in einer dazu parallelen zweiten Ebene eine erste leitfähige Empfängerstruktur (31) aufweist, wobei zwischen den beiden Ebenen ein elektrisches Feld erzeugbar ist, wobei eine Veränderung des elektrischen Feldes infolge einer Berührung erfolgt und wobei aus der Veränderung des elektrischen Feldes ein erstes Sensorsignal erzeugbar ist, aus dem die Position der Berührung des Touchscreens (2) ermittelbar ist, und dass in der ersten Ebene zumindest in einem Teilbereich des Touchscreens (2) eine zweite leitfähige Senderstruktur (42) und in der zweiten Ebene wenigstens eine zweite leitfähige Empfängerstruktur (41) vorhanden sind, zwischen denen ein elektrisches Feld erzeugbar ist, wobei eine Veränderung des elektrischen Feldes infolge einer Berührung erfolgt und wobei aus der Veränderung des elektrischen Feldes ein zweites Sensorsignal erzeugbar ist, aus dem die Position der Berührung des Touchscreens (2) ermittelbar ist.

Durch die redundante zweite Sender- und Empfängerstruktur werden Berührungen des Touchscreen (2) und damit Benutzereingaben sicher erfasst bzw. eine Fehlfunktion des betreffenden Touchscreens (2) schnell erkannt.

## Beschreibung

Die Erfindung betrifft einen Touchscreen sowie ein Verfahren zum Betrieb eines Touchscreens zur Bedienung eines Touchscreen-Gerätes durch Berührung des Touchscreens durch einen Benutzer, wobei der Touchscreen in einer ersten Ebene eine erste leitfähige Senderstruktur und in einer dazu parallelen zweiten Ebene eine erste leitfähige Empfängerstruktur aufweist, wobei zwischen den beiden Ebenen ein elektrisches Feld erzeugbar ist, wobei eine Veränderung des elektrischen Feldes infolge einer Berührung erfolgt und wobei aus der Veränderung des elektrischen Feldes ein Sensorsignal erzeugbar ist, aus dem die Position der Berührung des Touchscreens ermittelbar ist.

Das heute bei Touchscreens am häufigsten angewendete Funktionsprinzip ist das des kapazitiven Touchscreens. Bei einem kapazitiven Touchscreen sind zwei elektrisch wirksame, parallele Ebenen vorhanden, wobei die erste Ebene eine Senderstruktur aufweist und als Treiber wirkt und die zweite Ebene eine leitfähige Empfängerstruktur aufweist und als Sensor wirkt, der Sensorsignale liefert. Bei den kapazitiven Touchscreens haben sich insbesondere so genannte projiziert kapazitive Touchscreens (PCAP = Projective Capacitive) durchgesetzt. Bei diesen sind die beiden leitfähigen Ebenen meistens als leitfähige Muster, zumeist in Form dünner Linien, Streifen oder Rauten ausgebildet. Die Empfängerstruktur ist dabei vorzugsweise auf der Rückseite des Deckglases angebracht, durch die die Erkennung sozusagen "hindurchprojiziert" wird. Die Empfängerstruktur ist somit durch das Deckglas geschützt und daher weitgehend verschleißfrei. Weiterhin erlaubt diese Technik auch die gleichzeitige Erkennung mehrerer Berührpunkte bzw. von Gesten, weshalb sie auch als "Multi-Touch" bezeichnet wird.

Bei Geräten aus dem Umfeld der industriellen Automatisierungstechnik werden häufig gegenüber vergleichbaren Geräten aus anderen Bereichen erhöhte Sicherheitsanforderungen gestellt. Insbesondere kann bei der Bedienung von Maschinen durch eine Fehlbedienung ein Schaden an der Maschine oder sogar eine Gefährdung von Personen hervorgerufen werden. Betreffende Geräte müssen daher erhöhten Sicherheitsanforderungen genügen.

Bei der Verwendung kapazitiver Touchscreens und Touchscreen-Geräten, z.B. Geräten zum Bedienen, Beobachten oder zur Inbetriebsetzung von Maschinen oder Anlagen, kann das Problem auftreten, dass eine Berührung des Touchscreen durch einen Benutzer nicht richtig erkannt wird und der Touchscreen daher ein fehlerhaftes Signal liefert.

Aufgabe der vorliegenden Erfindung ist es daher, die Zuverlässigkeit der Sensorsignale, die von einem Touchscreen geliefert werden, zu erhöhen.

Diese Aufgabe wird gelöst durch einen Touchscreen mit den Merkmalen gemäß Patentanspruch 1. Weiterhin wird die Aufgabe gelöst durch ein Verfahren gemäß Patentanspruch 13.

Wie bei kapazitiven Touchscreens üblich, umfasst auch der erfindungsgemäße Touchscreen zwei voneinander beabstandete Ebenen, wobei sich in der ersten Ebene eine leitfähige Senderstruktur und in der zweiten Ebene eine leitfähige Empfängerstruktur befindet. Zwischen den beiden Ebenen ist ein elektrisches Feld erzeugbar, was durch Anlegen einer Spannung zwischen der Senderstruktur und der Empfängerstruktur erfolgt. Insbesondere werden Senderelektroden durch ein Anregungssignal in Form von Spannungspulsen versorgt und deren Auswirkungen auf Empfängerelektroden gemessen.

Durch eine Berührung des Touchscreen durch einen Benutzer wird das elektrische Feld zwischen der Senderstruktur und der Empfängerstruktur verändert, wodurch detektierbare Stromflüsse innerhalb der Strukturen hervorgerufen werden. Hierzu sind die Senderstruktur und die Empfängerstruktur mit einem Touchscreen-Controller verbunden, der für das Anlegen der Spannung zwischen der Sender- und der Empfängerstruktur und zum Erfassen der durch eine Berührung hervorgerufenen Stromflüsse dient. Die Senderstruktur, die Empfängerstruktur und der Controller bilden somit zusammen einen Sensor, der ein Sensorsignal liefert, aus dem die Position der Berührung ermittelbar ist.

Im Unterschied zu herkömmlichen Touchscreens weist der erfindungsgemäße Touchscreen wenigstens in einem Teilbereich des Touchscreens, vorzugsweise jedoch im gesamten sensitiven Bereich, in der ersten Ebene wenigstens zwei leitfähige Senderstrukturen und in der zweiten Ebene wenigstens zwei leitfähige Empfängerstrukturen auf, wobei zwischen der ersten Senderstruktur und der ersten Empfängerstruktur eine erste Spannung anlegbar ist, und unabhängig davon zwischen der zweiten Senderstruktur und der zweiten Empfängerstruktur eine zweite Spannung anlegbar ist. Insbesondere ist die erste Senderstruktur mit einem ersten Anregungssignal in Form von Spannungspulsen versorgbar und unabhängig davon die zweite Senderstruktur mit einem zweiten Anregungssignal in Form von Spannungspulsen versorgbar. Die beiden Anregungssignale unterscheiden sich vorzugsweise nur durch einen zeitlichen Versatz. Aus der ersten Senderstruktur und der ersten Empfängerstruktur lässt sich ein erstes Sensorsignal gewinnen und unabhängig davon von der zweiten Senderstruktur und der zweiten Empfängerstruktur ein zweites Sensorsignal. Bei der ordnungsgemäßen Funktion des Touchscreens müssten infolge einer Berührung eines bestimmten Punktes innerhalb des betreffenden Teilbereiches des Touchscreens somit zwei Sensorsignale geliefert werden, die allenfalls geringfügig voneinander abweichen bzw. deren Abweichung innerhalb eines engen Toleranzbereiches liegt. Liegt die Abweichung der Sensorsignale außerhalb des Toleranzbereiches, d.h. sie unterscheiden sich mehr als ein vorgegebenes oder vorgebbares Maß, so deutet dies auf einen Fehler bei der Bestimmung der Position der Berührung und damit die nicht ordnungsgemäße Funktion des Touchscreens hin. Vorteilhaft werden dann in dem zuletzt vorliegenden Fall von einem betreffenden Touchscreen-Gerät weitere Maßnahmen ausgelöst, beispielsweise die Abgabe eines Warnhinweises an den Benutzer oder die Sperrung sicherheitsrelevanter Bedienfunktionen, die sonst mit dem betreffenden Touchscreen-Gerät ausführbar sind.

Da beide Senderstrukturen in einer gemeinsamen Ebene liegen und beide Empfängerstrukturen in einer gemeinsamen Ebene liegen erhöhen sich die Herstellungskosten des erfindungsgemäßen Touchscreens gegenüber einem herkömmlichen Touchscreen nur unwesentlich.

Bei einer bevorzugten Ausführungsform der Erfindung sind die Senderstruktur und/oder die Empfängerstruktur als Linien- oder Streifenmuster ausgeführt. Weiterhin verlaufen die Linien bzw. Streifen der Senderstruktur um 90° gedreht gegenüber den Linien bzw. Streifen der Empfängerstruktur. Gegenüber dieser so genannten Kreuzstruktur sind jedoch auch andere Strukturen möglich, beispielsweise eine Rautenstruktur.

Gemäß einer weiteren bevorzugten Ausführungsform der Erfindung sind die erste Senderstruktur und die erste Empfängerstruktur mit einem ersten Touchscreen-Controller verbunden und entsprechend die zweite Senderstruktur und die zweite Empfängerstruktur mit einem zweiten Touchscreen-Controller. Dadurch ist gewährleistet, dass zwei vollständig voneinander getrennte Sensoreinheiten vorhanden sind, die unabhängig voneinander Sensorsignale liefern, die zur Überprüfung der Funktionsfähigkeit des Touchscreens miteinander verglichen werden können. Es ist somit ein redundantes Sensorsystem realisiert, bei dem sich die Sensoren gegenseitig überprüfen.

Die praktische Realisierung der beiden in einer Ebene liegenden Senderstrukturen bzw. der beiden in einer Ebene liegenden Empfängerstrukturen ist am einfachsten dadurch möglich, dass die jeweiligen Strukturen ineinander verzahnt ausgebildet sind. Dies bedeutet, dass z.B. bei der Ausbildung der Senderstrukturen in Form von Linien oder Streifen zwei benachbarte Linien bzw. Streifen nicht zu derselben Senderstruktur gehören. Mit anderen Worten: Eine Linie bzw. ein Streifen der ersten Senderstruktur liegt stets direkt neben einer Linie bzw. einem Streifen der zweiten Senderstruktur. Analoges gilt für die Empfängerstrukturen. Durch diesen symmetrischen Aufbau ist gewährleistet, dass beide Sensoren im Idealfall stets gleich reagieren und auch die erreichbare Auflösung eines erfindungsgemäßen Touchscreens allenfalls unwesentlich von der erreichbaren Auflösung eines herkömmlichen Touchscreens abweicht.

Damit sich die beiden gemäß der Erfindung realisierten Sensoreinheiten nicht gegenseitig beeinflussen, sieht eine bevorzugte Ausbildungsform der Erfindung vor, dass die beiden Sensoreinheiten ihre Sensorsignale im zeitlichen Wechsel erzeugen. Das bedeutet, dass für die Zeitdauer, in der die erste Sensoreinheit ein Sensorsignal erzeugt, die zweite Sensoreinheit zumindest dahingehend inaktiv ist, dass kein Anregungssignal zwischen der zweiten Senderstruktur und der zweiten Empfängerstruktur angelegt wird. Entsprechendes gilt für die erste Sensoreinheit für die Zeitdauer, in der die zweite Sensoreinheit ein Sensorsignal erzeugt.

Damit mittels der beiden Sensoreinheiten abwechselnd Sensorsignale erzeugt werden können, ist es erforderlich, die beiden Sensoreinheiten zu synchronisieren. Hierfür umfasst ein entsprechendes Touchscreen-Gerät vorteilhaft Mittel zur Synchronisation des ersten Touchscreen-Controllers und des zweiten Touchscreen-Controllers. Beispielsweise können von einem Mikroprozessor entsprechende Synchronisierungssignale abgegeben werden.

Eine andere Realisierungsmöglichkeit zur Erzeugung zeitlich aufeinanderfolgender Sensorsignale sieht vor, dass eine Verbindung zwischen dem ersten Touchscreen-Controller und einem Signalprozessor sowie eine weitere Verbindung zwischen dem zweiten Touchscreen-Controller und dem Signalprozessor jeweils schaltbar ausgeführt sind. Der Signalprozessor ist dabei insbesondere für den Vergleich der beiden erzeugten Sensorsignale zuständig. Durch die schaltbare Signalverbindung ist gewährleistet, dass stets nur von einem Touchscreen-Controller und somit von einer Sensoreinheit Signale bzw. Daten geliefert werden.

Die Erfindung wird nachfolgend anhand von Ausführungsbeispielen näher erläutert. Es zeigen:
- FIG 1: ein System aus einem Touchscreen-Gerät mit einem erfindungsgemäßen Touchscreen und einem weiteren Gerät,
- FIG 2: ein erstes beispielhaftes System zur Erzeugung von Sensorsignalen mittels eines erfindungsgemäßen Touchscreens, und
- FIG 3: ein zweites beispielhaftes System zur Erzeugung von Sensorsignalen mittels eines erfindungsgemäßen Touchscreens.

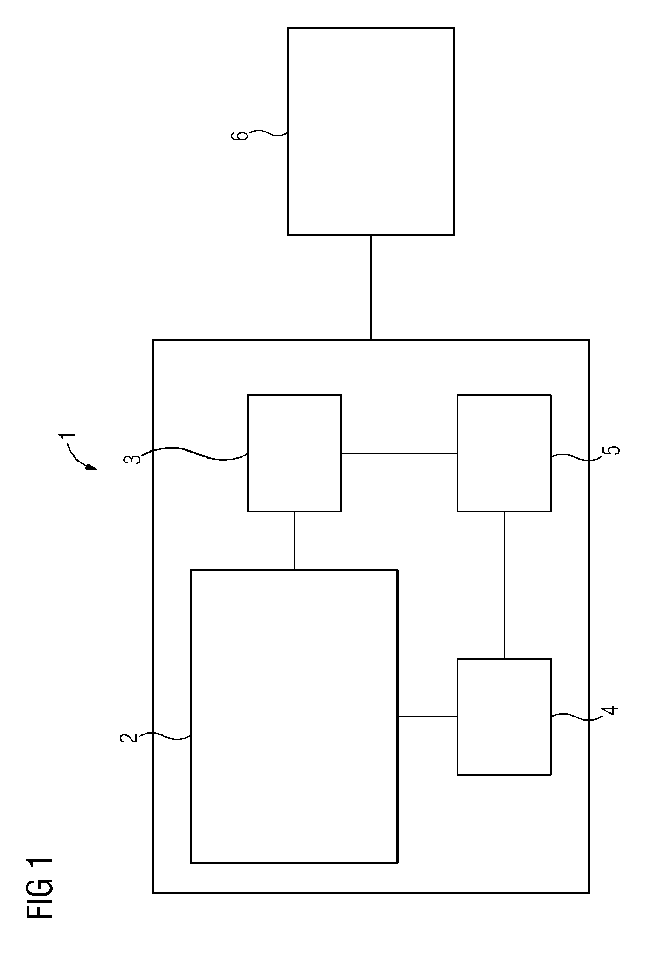

Figur 1 veranschaulicht die Erfindung anhand eines Touchscreen-Gerätes 1 aus dem Bereich der industriellen Automatisierungstechnik, welches im Ausführungsbeispiel als HMI-Gerät (Human Machine Interface) ausgebildet ist. Das Touchscreen-Gerät 1 umfasst als Eingabemittel einen Touchscreen 2, mit dem durch entsprechende Berührungen der Oberfläche durch einen Benutzer Bedienhandlungen vorgenommen und mittels Touchscreen-Controllern 3 und 4 erfasst und ausgewertet werden können. Zur Abarbeitung einer in der beschriebenen Weise ausgelösten Bedienfunktion umfasst das Touchscreen-Gerät 1 ferner eine Prozessoreinheit 5.

Üblicherweise betreffen die von dem Touchscreen-Gerät 1 ausgeführten Bedienfunktionen nicht nur das Touchscreen-Gerät 1 selbst, sondern sie können weitreichende Auswirkungen auf das gesamte industrielle Automatisierungssystem haben, in das das Touchscreen-Gerät 1 eingebunden ist. Dies ist in Figur 1 dadurch veranschaulicht, dass das Touchscreen-Gerät 1 mit einem weiteren Gerät der industriellen Automatisierungsumgebung verbunden ist, beispielsweise einer industriellen Steuerung 6. Letztendlich wird somit über das Touchscreen-Gerät 1 auch eine sichere Bedienung der industriellen Steuerung 6 ermöglicht.

Bei dem Touchscreen 2 gemäß der Erfindung werden Berührungen der Oberfläche durch einen Benutzer anhand zweier getrennt voneinander arbeitenden Sensoreinheiten erkannt, wobei im Ausführungsbeispiel jede Sensoreinheit den gesamten sensitiven Bereich der Touchscreen-Oberfläche erfasst. Jede Sensoreinheit umfasst ferner eine PCAP- (Projective Capacitive-) Sensor-Schicht, wodurch jeweils der Spezialfall eines kapazitiven Touchscreens realisiert ist. Die PCAP Sensor-Schicht umfasst zwei parallel angeordnete Ebenen mit leitfähigen Mustern (vorzugsweise Linien oder Streifen), die isoliert voneinander angebracht sind. Diese Ebenen bilden einen Kondensator, dessen Kapazität sich durch Berührung ändert, wodurch messbare Ströme an den Anschlüssen des leitfähigen Musters hervorgerufen werden. Die PCAP-Technik bietet den Vorteil, dass damit auch mehrere Berührungen gleichzeitig oder Gesten erkennbar sind, wofür sich auch die Bezeichnung "Multi-Touch" durchgesetzt hat.

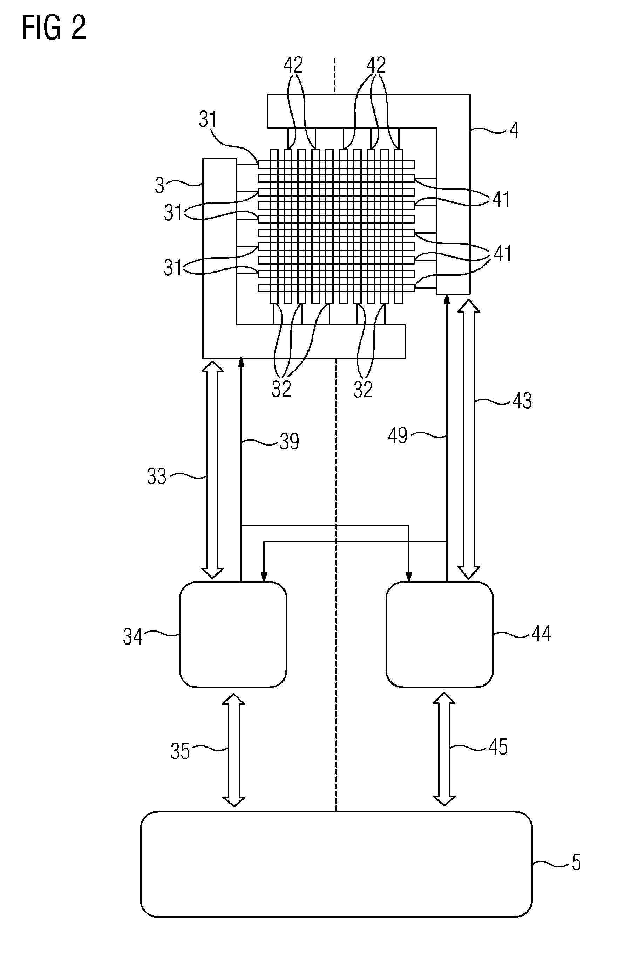

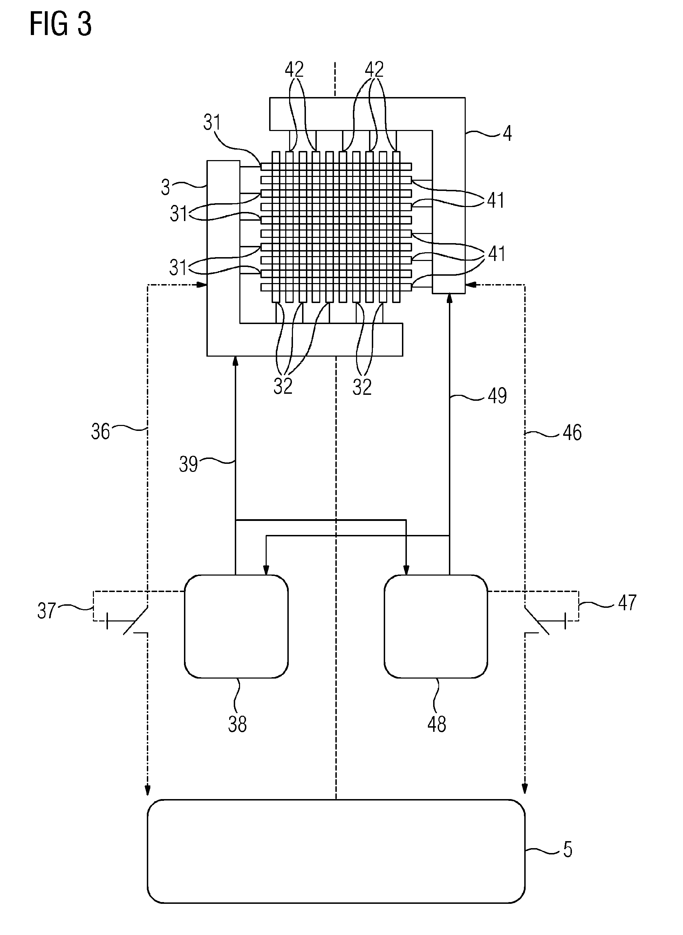

Die Figuren 2 und 3 zeigen beispielhaft die Signalerzeugung und Weiterleitung für Sensorsysteme erfindungsgemäßer Touchscreens. Gemäß Figur 2 umfasst eine erste Sensoreinheit eine erste leitfähige Empfängerstruktur 31 in Form eines Streifenmusters sowie eine erste leitfähige Senderstruktur 32 in Form eines Streifenmusters, wobei die leitfähige Senderstruktur und die leitfähige Empfängerstruktur in zwei parallelen Ebenen angeordnet und hinsichtlich des jeweiligen Streifenmusters im Ausführungsbeispiel um 90° gedreht zueinander ausgerichtet sind. Zur Erzeugung des Sendersignals und zum Empfang des Empfängersignals sind die beiden Strukturen 31 und 32 mit einem ersten Touchscreen-Controller 3 verbunden.

Der erfindungsgemäße Touchscreen umfasst ferner in der ersten Ebene, in der sich auch die erste leitfähige Senderstruktur 32 befindet, eine zweite leitfähige Senderstruktur 42 und in der zweiten Ebene, in der sich auch die erste leitfähige Empfängerstruktur 31 befindet, eine zweite leitfähige Empfängerstruktur 41. Gemeinsam mit dem zweiten Touchscreen-Controller 4 bilden die zweite leitfähige Empfängerstruktur 41 und die zweite leitfähige Senderstruktur 42 somit eine zweite Sensoreinheit, die analog zu der Sensoreinheit bestehend aus dem ersten Touchscreen-Controller 3, der ersten leitfähigen Empfängerstruktur 31 sowie der ersten leitfähigen Senderstruktur 32 aufgebaut ist. Vorteilhaft sind die leitfähigen Streifen der ersten leitfähigen Empfängerstruktur 31 im Wechsel mit den leitfähigen Streifen der zweiten leitfähigen Empfängerstruktur 41 und analog die leitfähigen Streifen der ersten leitfähigen Senderstruktur 32 im Wechsel mit den Streifen der zweiten leitfähigen Senderstruktur 42 angeordnet. Die beiden Strukturen sind somit jeweils ineinander verzahnt ausgebildet. Durch die Anzahl und den Abstand der Streifen wird die jeweils mit dem Sensor erreichbare Auflösung festgelegt. Die von den Touchscreen-Controllern 3 und 4 erzeugten Sensorsignale werden jeweils über I2C- (Inter-Integrated-Circuit-) Bussysteme 33 und 43 den Mikroprozessoren 34 und 44 zugeführt, darin in USB/HID- (Universal Serial Bus/Human Interface Device-) Signale 35 und 45 umgewandelt und der Prozessoreinheit 5 zugeführt. Die Mikroprozessoren 34 und 44 bewirken im Ausführungsbeispiel insbesondere durch die Synchronisationssignale 39 und 49 auch die Synchronisation der Touchscreen-Controller 3 und 4, so dass die beiden Sensoreinheiten die Sensorsignale in zeitlichem Wechsel erzeugen. Der Touchscreen bietet somit die Möglichkeit, mit den beiden Touchscreen-Controllern 3 und 4 die beiden Sensorsignale im zeitlichen Wechsel zu erzeugen und anschließend auszuwerten. Dadurch ist es möglich, dieselbe Touchscreen-Sensorebene zweikanalig auszuwerten. Erfindungsgemäß werden die beiden Sensoreinheiten abwechselnd nacheinander betrieben, um eine gegenseitige Beeinflussung zu vermeiden. Aufgrund sehr schneller Auswerteintervalle (beispielsweise im ms-Bereich) ist dieser abwechselnde Betrieb problemlos möglich, da auch kürzeste Störungen sicher erkannt werden können.

In der Prozessoreinheit 5 findet vorteilhaft ein Vergleich der jeweils von den beiden Sensoreinheiten erzeugten Sensorsignale statt. Bei einer ordnungsgemäßen Funktion des Touchscreens liefern die beiden Sensoreinheiten nahezu identische Sensorsignale, deren Abweichungen innerhalb eines Toleranzbandes liegen. Wird eine Abweichung festgestellt, die außerhalb des Toleranzbandes liegt, so werden bei dem betreffenden Touchscreen zuvor festgelegte Maßnahmen eingeleitet. Diese können beispielsweise die Erzeugung einer Fehlermeldung oder die Sperrung des Touchscreens für sicherheitsrelevante Eingaben bewirken.

Ein weiteres Ausführungsbeispiel eines erfindungsgemäßen Touchscreens ist in Figur 3 dargestellt. Dieses stimmt in weiten Teilen mit dem Ausführungsbeispiel gemäß Figur 2 überein, was auch durch die Verwendung übereinstimmender Bezugszeichen zum Ausdruck gebracht wird. Die beiden Ausführungsbeispiele unterscheiden sich im Wesentlichen durch die Art der Weiterleitung der von den beiden Sensoreinheiten erzeugten Sensorsignale zu der Prozessoreinheit 5. Anders als bei dem Ausführungsbeispiel gemäß Figur 2 erfolgt bei dem Ausführungsbeispiel gemäß Figur 3 die Signalweiterleitung über USB/HID-Busse 36 bzw. 46, die über die beiden Schalter 37 bzw. 47 schaltbar sind. Dadurch kann auch die Signalübertragung im zeitlichen Wechsel analog zu der Signalerzeugung durch die beiden Sensoreinheiten erfolgen.

Insgesamt kann durch den zweikanaligen Aufbau des Touchscreens mit der voneinander getrennten Signalerzeugung und Weiterleitung die Fehlersicherheit bei dem betreffenden Touchscreen wesentlich erhöht werden.

## Patentansprüche

1. Touchscreen (2) zur Bedienung eines Touchscreen-Gerätes (1) durch Berührung des Touchscreens (2) durch einen Benutzer, wobei der Touchscreen (2) in einer ersten Ebene eine erste leitfähige Senderstruktur (32) und in einer dazu parallelen zweiten Ebene eine erste leitfähige Empfängerstruktur (31) aufweist, wobei zwischen den beiden Ebenen ein elektrisches Feld erzeugbar ist, wobei eine Veränderung des elektrischen Feldes infolge einer Berührung erfolgt und wobei aus der Veränderung des elektrischen Feldes ein erstes Sensorsignal erzeugbar ist, aus dem die Position der Berührung des Touchscreens (2) ermittelbar ist,
**dadurch gekennzeichnet, dass** in der ersten Ebene zumindest in einem Teilbereich des Touchscreens (2) eine zweite leitfähige Senderstruktur (42) und in der zweiten Ebene wenigstens eine zweite leitfähige Empfängerstruktur (41) vorhanden sind, zwischen denen ein elektrisches Feld erzeugbar ist, wobei eine Veränderung des elektrischen Feldes infolge einer Berührung erfolgt und wobei aus der Veränderung des elektrischen Feldes ein zweites Sensorsignal erzeugbar ist, aus dem die Position der Berührung des Touchscreens (2) ermittelbar ist.

2. Touchscreen (2) nach Anspruch 1, wobei die erste leitfähige Senderstruktur (32) mit einem ersten Touchscreen-Controller (3) verbunden ist.

3. Touchscreen (2) nach Anspruch 1 oder 2, wobei die erste leitfähige Empfängerstruktur (31) mit einem bzw. dem ersten Touchscreen-Controller (3) verbunden ist.

4. Touchscreen (2) nach einem der Ansprüche 1 bis 3, wobei die zweite leitfähige Senderstruktur (42) mit einem zweiten Touchscreen-Controller (4) verbunden ist.

5. Touchscreen (2) nach einem der Ansprüche 1 bis 4, wobei die zweite leitfähige Empfängerstruktur (41) mit einem bzw. dem zweiten Touchscreen-Controller (4) verbunden ist.

6. Touchscreen (2) nach Anspruch 3 und 5, wobei die erste leitfähige Senderstruktur (32), die erste leitfähige Empfängerstruktur (31) und der erste Touchscreen-Controller (3) eine erste Sensoreinheit bilden, die ein erstes Sensorsignal erzeugt, wobei die zweite leitfähige Senderstruktur (42), die zweite leitfähige Empfängerstruktur (41) und der zweite Touchscreen-Controller (4) eine zweite Sensoreinheit bilden, die ein zweites Sensorsignal erzeugt, und wobei das erste Sensorsignal und das zweite Sensorsignal im zeitlichen Wechsel erzeugbar sind.

7. Touchscreen (2) nach einem der Ansprüche 1 bis 6, wobei die erste (32) und die zweite (42) leitfähige Senderstruktur als Linien-, Rauten- oder Streifenmuster ausgebildet sind.

8. Touchscreen (2) nach einem der Ansprüche 1 bis 7, wobei die erste (31) und die zweite (41) leitfähige Empfängerstruktur als Linien-, Rauten- oder Streifenmuster ausgebildet sind.

9. Touchscreen (2) nach einem der Ansprüche 1 bis 8, wobei die erste (32) und die zweite (42) leitfähige Senderstruktur ineinander verzahnt ausgebildet sind.

10. Touchscreen (2) nach einem der Ansprüche 1 bis 9, wobei die erste (31) und die zweite (41) leitfähige Empfängerstruktur ineinander verzahnt ausgebildet sind.

11. Touchscreen (2) nach einem der Ansprüche 1 bis 10, ausgebildet als projiziert kapazitiver Touchscreen.

12. Touchscreen-Gerät (1) mit einem Touchscreen (2) nach einem der Ansprüche 1 bis 11 zur Verwendung in der industriellen Automatisierungstechnik.

13. Verfahren zum Betrieb eines Touchscreens (2) zur Bedienung eines Touchscreen-Gerätes (1) durch Berührung des Touchscreens (2) durch einen Benutzer, wobei der Touchscreen (2) in einer ersten Ebene eine erste leitfähige Senderstruktur (32) und in einer dazu parallelen zweiten Ebene eine erste leitfähige Empfängerstruktur (31) aufweist, wobei zwischen den beiden Ebenen ein elektrisches Feld erzeugt wird, wobei eine Veränderung des elektrischen Feldes infolge einer Berührung erfolgt und wobei aus der Veränderung des elektrischen Feldes ein erstes Sensorsignal erzeugt wird, aus dem die Position der Berührung des Touchscreens (2) ermittelt wird, **dadurch gekennzeichnet, dass** in der ersten Ebene zumindest in einem Teilbereich des Touchscreens (2) eine zweite leitfähige Senderstruktur (42) und in der zweiten Ebene wenigstens eine zweite leitfähige Empfängerstruktur (41) vorhanden sind, zwischen denen ein elektrisches Feld erzeugt wird, wobei eine Veränderung des elektrischen Feldes infolge einer Berührung erfolgt und wobei aus der Veränderung des elektrischen Feldes ein zweites Sensorsignal erzeugt wird, aus dem die Position der Berührung des Touchscreens (2) ermittelt wird.

14. Verfahren zum Betrieb eines Touchscreens (2) nach Anspruch 13,
- wobei die erste leitfähige Senderstruktur (32) und die erste leitfähige Empfängerstruktur (31) mit einem ersten Touchscreen-Controller (3) verbunden sind,
- wobei die zweite leitfähige Senderstruktur (42) und die zweite leitfähige Empfängerstruktur (41) mit einem zweiten Touchscreen-Controller (4) verbunden sind,
- wobei die erste leitfähige Senderstruktur (32), die erste leitfähige Empfängerstruktur (31) und der erste Touchscreen-Controller (3) eine erste Sensoreinheit bilden, die ein erstes Sensorsignal erzeugt,
- wobei die zweite leitfähige Senderstruktur (42), die zweite leitfähige Empfängerstruktur (41) und der zweite Touchscreen-Controller (4) eine zweite Sensoreinheit bilden, die ein zweites Sensorsignal erzeugt,
- und wobei das erste Sensorsignal und das zweite Sensorsignal im zeitlichen Wechsel erzeugt werden.
